# EUROPEAN PATENT SPECIFICATION

(11) **EP 4 285 084 B1**
(45) Date of publication and mention of the grant of the patent: **05.03.2025**
(21) Application number: 22701631.8
(22) Date of filing: 25.01.2022
(51) Int. Cl.: G01D 9/00

(54) **AUTONOMOUS DATA LOGGER**
AUTONOMER DATENLOGGER
ENREGISTREUR DE DONNÉES AUTONOME

(30) Priority: 26.01.2021 EP 21153567
(43) Date of publication of application: 06.12.2023
(73) Proprietor: Max-Planck-Gesellschaft zur Förderung der Wissenschaften e.V., 80539 München (DE)
(72) Inventor: WILD, Timm, 79189 Bad Krozingen (DE); WIKELSKI, Martin, 78467 Konstanz (DE)
(74) Representative: Vossius & Partner Patentanwälte Rechtsanwälte mbB
(86) International application number: PCT/EP2022/051638
(87) International publication number: WO 2022/161950

(56) References cited:
- EP-A1- 0 918 212
- WO-A2-2006/079946
- US-A1- 2005 021 296
- US-B1- 6 735 630
- US-B2- 7 389 674
- US-B2- 8 700 924

## Description

The present invention relates to a device, method and system for recording and storing and transmitting of measurement data related to an object or a living object like an animal or a human. The present disclosure may also be used for objects which are passively exposed to environmental impacts.

The term autonomous data logger refers to a device which is able to autonomously collect data of an object of research. Such devices, in particular when tracking animals often referred to as biologgers, may gather and provide data on the behaviour of animals or objects. In general, such systems comprise a housing, electronics, energy storage or power source, an embedded microcontroller software and, if applicable, a solar cell for energy generation. In this manner, the devices may autonomously collect data of the object of research. The biologgers are attached to the object or the animal (e.g. worn as a backpack, a foot ring or collar) and can therefore collect data on the respective animal's behaviour. Ideally, the animal wears the biologger over the complete lifecycle of the animal in order to provide data on a long period of time without the necessity to capture the animal multiple times.

Biologgers according to the state of the art utilise lithium cells as a primary source of energy. However, rechargeable lithium batteries require electronics such as a low-dropout regulator (LDO) or a direct current/direct current (DC/DC) converter in order to maintain a constant operating voltage. Moreover, for charging lithium cells and especially for charging lithium cells via solar cells, components specifically adapted for secure charging are necessary which further add weight and required space to the device due to the coils and passive elements needed. Also, circuitry to prevent the battery from overcharge, deep discharge and trickle charging has to be included. These electronic elements, however, add weight to the system and make the device thus less comfortable to wear for the animal.

US 7 389 674 B2 relates to an energy-autonomous sensor for detection of physical environmental parameters. US 8 700 924 B2 discloses a modular sensor node and communications system. EP 0 918 212 A1 discloses a method for the acquisition and evaluation of temperature dependent consumption values or other physical measuring values. WO 2006/079946 A2 relates to a sensor circuit array and a respective control device and system. US 6 735 630 B1 discloses a method for collecting data using compact internetworked wireless integrated network sensors (WINS). US 2005/021296 A1 relates to an apparatus and control method for an intelligent sensor device.

It is thus an object of the present disclosure to overcome disadvantages of the prior art. In particular, a lightweight, e.g. animal-mounted, device is provided that is solely powered by one or more capacitor(s) and one or more photosensitive element(s), preferably a photo diode array, offering various advantages over lithium cells as state-of-the-art power technology for long-term biologgers. This object is met with the present disclosure. The concept combines and tightly couples an ultra low power and ultra lightweight hardware design with an embedded software in order to smartly budget the available energy of the supercapacitor as primary power source. Energy is used to power an adaptive, event driven activity monitoring algorithm, based for example on continuously evaluated acceleration data as a measure for activity.

The invention is defined in the independent claims. Dependent claims describe preferred embodiments. In particular, the present invention relates to a device for recording and storing of measurement data related to an object or living subject. The device comprises at least one sensor configured to measure data related to the object or living subject, a memory, and a controller configured to store the measured data in the memory. At least one photosensitive element is configured to convert electromagnetic radiation into electrical current. A transceiver is configured to transmit the measured and/or stored data and to receive data signals. At least one capacitor is configured to store electrical current from the at least one photosensitive element.

Various embodiments may preferably implement the following features.

Preferably, the controller is configured to measure the voltage of the at least one capacitor.

Preferably, the controller is configured to forecast an output voltage of the at least one capacitor based on measured voltages, and the controller is configured to increase or decrease the rate of sampling and storing of the measured data in the memory and/or to increase or decrease the rate of transmitting the measured and/or stored data depending on the measured voltage or the forecasted voltage.

Preferably, the rate of sampling and storing of the measured data in the memory and/or the rate of transmitting the measured and/or stored data is highest at a maximum measured voltage or forecasted voltage and lowest at the a minimum measured voltage or forecasted voltage, wherein preferably the maximum voltage is the rated voltage of the capacitor and the minimum voltage is 0.66 of the maximum voltage.

Preferably, the device further comprises a real-time clock, RTC, wherein the RTC is preferably independently running from the controller.

Preferably, the controller is configured to power down at least one of the at least one sensor, the memory, or the transceiver when the measured voltage of the at least one capacitor is below the minimum voltage.

Preferably, the controller is configured to receive a wake-up signal from the RTC and to measure the voltage of the at least one capacitor upon receipt of the wake-up signal.

Preferably, the device comprises a plurality of photosensitive elements, preferably arranged in series.

Preferably, the open-circuit voltage of the photosensitive element or the sum of open-circuit voltages of the plurality of photosensitive elements is higher than the rated voltage of the capacitor, wherein preferably the rated voltage of the capacitor is between 0.6 to 0.8 of the open-circuit voltage of the photosensitive element or the sum of open-circuit voltages of the plurality of photosensitive elements, and more preferably 0.75 of the open-circuit voltage of the photosensitive element.

Preferably, the at least one photosensitive element is or comprises a photodiode, wherein preferably the wavelength of the maximum sensitivity of the at least one photosensitive element is between 200 nm and 3000 nm, preferably between 400 nm and 1100 nm, and/or wherein the capacitor has a capacity between 0.2 and 50 Farad.

Preferably, the transceiver is or comprises a long range wide area network module or a Bluetooth low energy module and/or the at least one sensor is or comprises at least one of a gyroscope, an acceleration sensor, a temperature sensor, a humidity sensor, a magnetometer, a barometer, a light sensor, a volatile organic compounds, VOC, sensor or a global navigations satellite systems, GNSS, module.

Preferably, the device further comprises at least one of a collar, a harness, a leg band, an ear tag, a backpack, a band, a screw, glue or a claw configured to be attached to the object or living subject.

Preferably, the device further comprises a printed circuit board, PCB, wherein the at least one sensor, the memory, the controller, the at least one photosensitive element, the transceiver and the capacitor are directly soldered to the PCB in one assembly step, preferably by reflow soldering.

The present disclosure further relates to a system comprising at least two devices as described above, wherein the controller of at least one of the at least two devices is configured to estimate the relative position of the at least one device to at least one other device of the at least two devices using the signal strength of signals, RSSI, received from the at least one other device of the at least two devices.

Preferably, the at least one device is configured to transmit and receive data signals to and from at least one other device or the system further comprises at least one base station being configured to transmit and receive data signals to and from the at least one device.

The present disclosure also encompasses a method for recording and storing of measurement data related to an object or living subject. The method comprises measuring, by at least one sensor, data related to the object or living subject, storing, by a controller, the measured data in a memory, and converting, by at least one photosensitive element, electromagnetic radiation into electrical current. The measured and/or stored data is transmitted and data signals are received by a transceiver. Electrical current from the at least one photosensitive element is stored in at least one capacitor. A voltage of the at least one capacitor is measured and an output voltage of the at least one capacitor is forecast based on measured voltages. The method further comprises increasing or decreasing the rate of sampling and storing of the measured data in the memory and/or increasing or decreasing the rate of transmitting the measured and/or stored data depending on the measured voltage or the forecasted voltage.

The rate of sampling and storing of the measured data in the memory and/or the rate of transmitting the measured and/or stored data may be highest at a maximum measured voltage or forecasted voltage and lowest at a minimum measured voltage or forecasted voltage.

The method preferably further comprises generating, by the controller, statistical data of the measured data and storing the statistical data in the memory.

The disclosure is further described with reference to the attached drawings.
Fig. 1 is a schematic depiction of a biologger according to the prior art,
Fig. 2 is a schematic depiction of a logging device according to an example of the present disclosure, and
Fig. 3 is a schematic depiction of a logging device according to an example of the present disclosure.

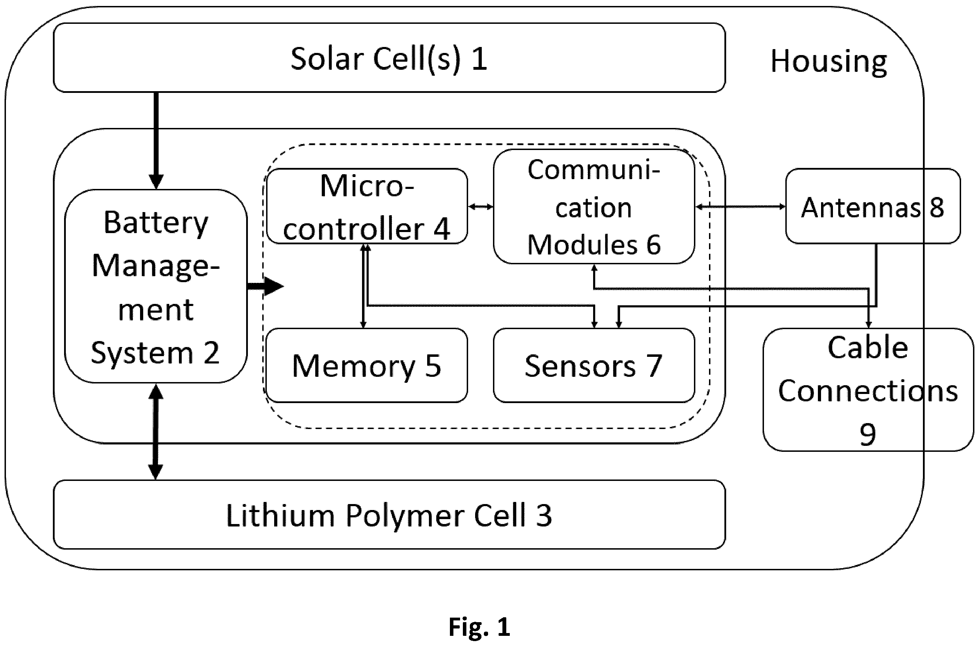

Fig. 1 shows a schematic diagram of a biologger according to the prior art. One or more solar cells 1 for energy generation are mounted in or on a housing and connected via a battery management system 2 to a lithium polymer cell 3. The battery management system 2 is further connected and distributes energy to the electronics consisting of a microcontroller 4, a memory 5, communication modules 6 and sensors 7. The communication modules 6 and the sensors 7 are further connected to antennas 8 and cable connections 9 as indicated in the figures. The housing seals the elements, protecting them from environmental impacts and damage.

Therein, the microcontroller 4 controls sensors 7 and communication modules 6. Typically, in case the stored energy is sufficient for operation of the biologger, data is gathered, processed and (temporarily) stored. Depending on the circumstances, data may be sent and/or received (e.g. for reconfiguration of the biologger) via a communication channel. The system then normally switches to a sleep mode (deep sleep) in order not to unnecessarily discharge the lithium polymer cell 3 and wakes up after a predetermined time interval. Certain systems also utilise a standby mode in which at least one communication module 6 is active and wakes the biologger up if certain radio signals are received.

In these systems, the battery management system 2 forms an autonomous unit which is decoupled from the core functionality of the device. It therefore continuously requires energy in order to monitor and protect the energy storage, i.e. the lithium polymer battery 3. Conventional biologgers read the battery state as an ADC signal and then save it as a sensor value and/or communicate it as a state-of-health (SOH) value of the embedded system. This information can also be used for switching to an energy saving mode or to perform energy intensive operations such as transmission of data or an attempt to acquire the current position over GPS, if the remaining charge allows to. Conventional devices often turn off, hardware or software based, below a critical battery voltage.

However, the electronics needed for energy management require space, energy and add weight to the system. Furthermore, the circuitry generates potential disturbing sources for RF modules due to high frequency switching of converters. Hence, the present disclosure provides a different charging, operating and energy concept for biologgers capable of autonomously operating for a long period of time while gathering behavioural data of the animal and managing the available energy.

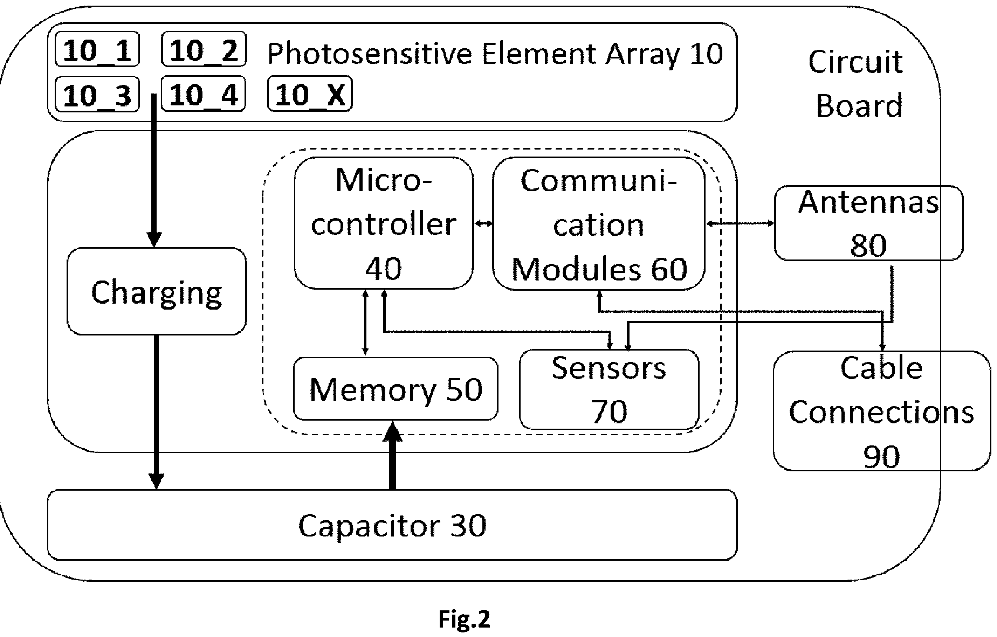

Fig. 2 is a schematic depiction of an example according to the present disclosure. The following examples will be described with reference to a device attached to a living animal. However, the present disclosure is not limited to this application and may also be employed for other objects, e.g. being exposed to environmental impacts such as flotsam.

The example embodiment of a biologger comprises a circuit board on which the remaining components are placed or to which the remaining components are attached. For energy generation, the biologger comprises at least one photosensitive element, preferably a photosensitive element array 10 and more preferably an array of photodiodes. Alternatively or in addition, solar cells may be used. When sunlight is incident on the photosensitive elements 10, a charging current is generated charging the capacitor 30, preferably a super capacitor, serving as energy storage. A Schottky diode can be arranged with the reverse direction towards the at least one photosensitive element in order to prevent the capacitor 30 from discharging via the photosensitive elements 10.

A low voltage super capacitor 30 can be viewed as a volatile, short-term energy buffer. According to the present example, it is charged via a photosensitive element array 10 (photodiode or solar cell array) connected in series (elements 10_1 to 10_X), wherein the total number of photosensitive elements 10, i.e. the total open-circuit voltage, is adapted to the maximum rated voltage of the capacitor 30. Under normal lighting conditions, i.e. average daylight conditions, the voltage of the photosensitive elements 10 is above the minimal voltage necessary for operation of the biologger. This ensures that the capacitor 30 may also be charged under poor lighting conditions and operation of the system is possible.

According to an embodiment, the capacitor 30 may also be charged within seconds by being connected to an external energy source via at least one cable connection 90. The cable connection 90 may comprise a plurality of pins or various sockets and/or plugs. Charging and discharging current are only limited by the internal resistance of the capacitor 30 due to their type of construction.

This allows for a simple battery management system in comparison to conventional approaches as indicated above. In particular, a microcontroller 40 having an implemented software thereon monitors the state of the capacitor 30 and distributes energy or sets the system to a sleep mode depending on the state of charge. The available energy is directly and functionally linked to data to be collected by the biologger, allowing for effectively using surplus energy. This may be referred to as software based energy management.

The capacitor 30 provides power to the electronics section comprising the microcontroller 40, a memory 50, at least one communication module 60 and at least one sensor 70. The microcontroller 40 further works as or comprises an energy management system by embedded software. The at least one communication module 60 is configured to send and receive data wirelessly or via a wired connection. It is therefore connected to at least one antenna 80 and/or the at least one cable connection 90. The at least one antenna 80 is provided according to the desired method of communication such as Bluetooth low energy (Bluetooth LE), low power wide area network (LPWAN) such as LoRa/LoRaWAN or any other form of wireless transmission. In case LoRa/LoRaWAN communication is used, a super capacitor is preferred since it is able to provide high currents necessary for transmission. The at least one communication module 60 and the at least one antenna 80 may also be used for proximity detection, i.e. detecting whether another device is present and in which distance, e.g. via Bluetooth LE and/or a Received Signal Strength Indicator (RSSI). For communication purposes, a transceiver module 20 may be provided which is provided as a single module or a combined module comprising at least one of the at least one communication module 60, the at least one antenna 80 or at least one cable connection 90.

The at least one sensor 70 is used to collect movement and environmental data as well as position data. Suitable sensors may be, but is not limited to, environmental sensors (temperature, humidity, barometric pressure (barometer), air quality - e.g. via volatile organic compounds (VOC)), light sensor, 3 axis acceleration sensor (accelerometer), gyroscope, magnetometer, Global Navigation Satellite System (GNSS) sensor such as Global Positioning System (GPS), etc. These sensors provide valuable data on the movement and behaviour of the animal or object.

The complete hardware system comprising the microcontroller 40, memory 50, communication module(s) 60 and sensor(s) 70, indicated by the dotted line in Fig. 2, is adapted to operate under a wide range of supply voltage, thereby making an LDO or DC/DC converter for providing a constant supply voltage redundant. Thus, the number of hardware components is reduced, leading to reduced weight, lower standby currents and higher energy supply efficiency. All components are directly operated via the capacitor as indicated by the arrow in Fig. 2. Use of a lithium cell without a voltage regulator is typically not possible under such an advantageous operation, since a fully charged lithium cell e.g. supplies a voltage of 4.2 V which is higher than the maximum voltage rating of 3.6 V for many microcontrollers and sensors.

In order to efficiently manage the available energy, an operating concept is realised as a software on the microcontroller 40 for monitoring the charging state, i.e. the capacitor 30 voltage, and distributing energy or halting the operation. In particular, the energy management is capable of acting preventively and anticipatory in order to avoid overcharge or deep discharge of the capacitor 30. Therefore, the voltage of the capacitor 30, assuming a 3 V capacitor, is regulated to be in an area of 1.8 - 3 V. This voltage range is not to be understood as limiting and may vary according to the specifications of the capacitor and the electronics.

In contrast to a lithium cell, the load of the capacitor 30 can be determined quite accurately and with a low margin of error due to its linear dependency on the capacitor voltage by measuring the voltage of the capacitor 30, i.e. present at the capacitor 30. Since the maximum charging currents output by the photosensitive elements 10 can also be calculated, the future energy state may be estimated taking into account the charging current as well as the capacitor voltage history.

Since checking of the voltage present at the capacitor 30 requires very little energy, the microprocessor 40 can wake up in certain intervals and determine the charging state of the capacitor 30. Therefore, a real time clock (RTC) is provided which continuously runs and acts as a timekeeper. This allows for dynamically adapting sensor intervals, wake-up intervals, measurement and evaluation intervals etc. to the current energy state, i.e. the available energy stored in the capacitor 30. In particular, if the charging state of the capacitor 30 is high, the intervals may be set shorter, i.e. the measuring/transmission/evaluation/wake-up frequency may be increased up to continuous operation, and vice versa. At times of high light intensity incident on the photosensitive elements 10 it is preferred that the energy consumption of the electronics 40, 50, 60, 70 is equal to or higher than the maximum charging current generated by the photosensitive elements 10 in order to ensure that the capacitor 30 is not subject to overcharge. Thereby, excess energy is not converted into heat, as typically done in conventional battery management systems when reaching end of charge (EOC) state but can be effectively utilised for recording data with higher sampling frequency or transmitting data with higher frequency.

On the other hand, a deep discharge of the capacitor 30 must be avoided since the system might not be able to wake up from this state. Hence, the wake-up time interval for the microcontroller 40 to check the capacitor voltage is increased. Depending on the circumstances, the microcontroller 40 can be set to a sleep mode for several hours or days. The sleep mode affects all electrical loads of the device except the RTC, which meanwhile triggers the wake-up interval. However, preferably the wake-up interval is set in such a way that even if a high charging current is input to the capacitor 30 due to high light intensity, the microcontroller 40 wakes up early enough to prevent an overcharge of the capacitor 30.

The ratio of wake-up/measurement/transmission/evaluation/sampling intervals (or frequency) to charging state may be preconfigured and embedded in the software stored on the microprocessor 40 and/or memory 50. At least a lower and a higher threshold are set at which the intervals are increased and decreased (at which the frequency is decreased and increased), respectively.

However, preferably the software stored on the microprocessor 40 comprises a gradual increase of the wake-up/measurement/transmission/evaluation/sampling frequency with the charging state of the capacitor 30. This can be realised e.g. by implementing a mathematical relationship describing the wake-up frequency as a function of the capacitor voltage.

Also, the microcontroller 40 may be configured to measure a voltage of the at least one capacitor 30 (present at the at least one capacitor 30) and forecast an output voltage of the at least one capacitor 30 based on the measured voltage. The voltage is an indicator of the load and thus the energy stored in the capacitor 30. The forecast may e.g. be based on characteristics of the capacitor 30 and/or historic voltage data. It may also be based on e.g. the knowledge about the current local time and date provided by the RTC. At night it can be assumed that the capacitor voltage will not increase due to the lack of light incident on the photosensitive elements 10. When the measured voltage reaches a first predefined threshold and the forecasted output voltages exceeds said first threshold, the microcontroller 40 can increase or decrease the rate of sampling and storing of the measured data in the memory and/or increase or decrease the rate of transmitting the measured and/or stored data depending on the forecast voltage. The first threshold is below the rated voltage of the capacitor, preferably 0.9 of the rated voltage of the capacitor.

The microcontroller 40 is configured to power down at least one of the electronic components, except the RTC, when the measured voltage of the capacitor 30 is below the second threshold and/or to power up at least one of the electronic components when the measured output voltage is above the second threshold.

The second threshold is below the rated voltage of the capacitor 30, preferably at least 0.6 of the rated voltage of the capacitor 30, more preferably 0.66 of the rated voltage of the capacitor 30.

However, preferably, a gradual increase or decrease of wake-up/measurement/transmission/evaluation/sampling frequency is implemented in the microcontroller 40.

In other words, the microcontroller 40 is configured to forecast an output voltage of the at least one capacitor 40 based on measured voltages, and the microcontroller 40 is configured to increase or decrease the rate of sampling and storing of the measured data in the memory and/or to increase or decrease the rate of transmitting the measured and/or stored data depending on the forecast voltage. The rate of sampling and storing of the measured data in the memory and/or the rate of transmitting the measured and/or stored data is highest at a maximum forecast voltage and lowest at the minimum forecast voltage.

The maximum voltage can be the rated voltage of the capacitor 30 and the minimum voltage can be at least 0.6, preferably 0.66 of the maximum voltage.

The highest wake-up/measurement/transmission/evaluation/sampling frequency is a continuous operation of at least one of the electronic components, and the lowest frequency can be several hours or days.

The RTC is independently running and configured to monitor the wake-up intervals. The RTC send a wake-up signal which is received by the microcontroller 40 and the microcontroller 40 measures the voltage of the at least one capacitor 30 upon receipt of the wake-up signal.

When the measured voltage of the capacitor 30 is below the minimum voltage, the microcontroller 40 is configured to power down at least one of the at least one sensor 70, the memory 50, or the transceiver 20, 60, 80, 90 when the measured voltage of the at least one capacitor 30 is below the minimum voltage. As described above, a wake-up interval may be set in such a manner that overcharge and discharge of the capacitor 30 is avoided. The microcontroller 40 is waken up by the RTC in respective intervals to check or measure the voltage of the capacitor 30. This measurement process requires only little energy and therefore only marginally affects the charging state of the capacitor 30.

In any case, the hardware composition needs to support an ultra-low power shutdown mode to be able to revive the system after a lasting low power situation.

Adjacent devices or base stations may receive the wake-up interval from the biologger.

The data collected by the sensors 70 may be directly evaluated in the microprocessor 40 and stored in the memory 50 as statistical data. Such pre-processed data may save storage space and facilitate the analysis at a later stage. The following gives examples of data or sensor statistics which may be generated by the biologger.

The data of an acceleration sensor may be stored for three axes, preferably on an internal memory of the sensor, wherein the sampling frequency can vary between below 1 Hz and 25 Hz depending on the charging state of the capacitor 30 as explained above. When the internal memory is full, the microprocessor 40 may be woken up to collect and process the data of the acceleration sensor. Alternatively, a time interval may be set after which the microcontroller 40 wakes up to perform the processing, wherein the time interval can be dependent on the charging state of the capacitor 30. The data is then processed to generate a statistic of the acceleration values and stored in the memory 50.

In the following, examples are given for evaluation of the raw data. The time interval can be e.g. one hour and can be adapted according to the charging state and/or type of animal or object which is being monitored. The results are to be understood as examples and further behavioural information may be retrieved from the raw or statistical data.

A sum of 3D vector lengths (square root of the sum of squares) of acceleration values in g, minus the earth's gravity per hour indicates an activity index of the animal or object per time interval. This data can give insight on movement of certain species over the course of the year, day or season.

A maximum, minimum, median and mean acceleration of each of the three axes per time interval also yields an activity index.

The number of steps or wing beats, depending on the type of animal, per time interval via peak-to-peak counting or Fast Fourier Transform (FFT) and filtering can be used to approximate the travel distance of the animal.

Also, a ratio of movement and non-movement in percent per time interval, e.g. based on movement thresholds, can be used for generating an activity profile and classifying behaviour of the animal. The thresholds can be set depending on the type of animal which is monitored.

A number of exceeding thresholds of acceleration values (absolute value or per axis) per time interval helps determining high-action, potentially stress-induced, situations.

For birds, e.g., based on the data from a barometric pressure sensor, e.g. maximum and minimum barometric pressure per time interval, height of flight or time of stay in the nest and on the ground can be approximated.

The ratio of humidity and temperature above a certain threshold per time interval or maximum and minimum temperature per time interval can also provide information on the number and duration of stays in the nest or cave.

Based on proximity detection, e.g. via Bluetooth LE and/or RSSI, the number of encountered conspecifics, provided they also wear a corresponding biologger, can be recorded. This number as well as minimum, maximum and/or average distance per time interval can yield information on social interaction of a species.

The statistical data can be generated by the microcontroller 40 and stored in the memory 50. Thereby, storage space in the memory 50 is saved and the transmission of data is less energy intensive due to the smaller amount of transmitted data. Generation of statistical data may also be performed using a machine learning algorithm. The algorithm may be trained beforehand or during use of the biologger. Examples of training the algorithm may include the extraction of certain behavioral events on an animal, like counting steps or wing beats, detect body postures, for example sitting, laying, standing and/or detect more complex action sequences like for example hunting for food or dying.

The electronic components are directly soldered on or at a printed circuit board (PCB) having at least one layer, thereby rendering cables or wired connections redundant. (Super) capacitors, as opposed to lithium cells, can be mounted using reflow soldering by through-holes or as surface-mounted device (SMD). The remaining components may also be provided as SMDs and connected using reflow soldering. As the cable connections are a main reason of system failure due to mechanical wear and vibrations during use of the biologger, the direct mount solution considerably increases the life cycle of the devices.

In order to protect the elements from environmental impacts such as water and dirt, the device is lacquer coated and/or painted. This further reinforces the soldered connections and reduces the weight in comparison to the use of a conventional housing. Care has to be taken not to reduce the efficiency of the photosensitive elements.

An exemplary setup for test purposes utilised eight photodiodes of type BPW34 connected in series and mounted on a four-layer PCB. A 3 V, 1 F super capacitor (SCCQ12E105PRB 3V) was connected to the PCB as energy storage and power supply. Assuming optimal lighting conditions, this particular capacitor can be charged from 1.8 V to 3 V in 630 seconds. A Schottky Diode NSR0140P2T5G prevents the capacitor from discharging via the photodiodes. The Schottky diode is arranged with the reverse direction towards the array of photodiodes. Prevention of overcharge and deep discharge is performed by the software as explained above. The test device further featured an Attiny3217 8-Bit microcontroller, a BME280 environmental sensor (ambient temperature, humidity, barometric pressure, air quality via VOC) and a BMA400 three-axis acceleration sensor. According to a further example, an Attiny1616 8-Bit Microcontroller and a BME680 environmental sensor can be used. A CAT24M01HU5I-GT3 1Mbit electrically erasable programmable read-only memory (EEPROM) was provided as memory and as RTC, RV-3028-C7 RTC Clock was used. An ANNA-B112-01B Bluetooth Low Energy Module was provided for communication. The circuit further included an LED and passive components as well as an AXE616124 multipoint connector for modular extension of the system, programming of the microcontroller and read-out of data. Additionally, a VEML6035 light sensor for estimating and/or predicting the state of the device, e.g. the charging state, can be provided according to an example.

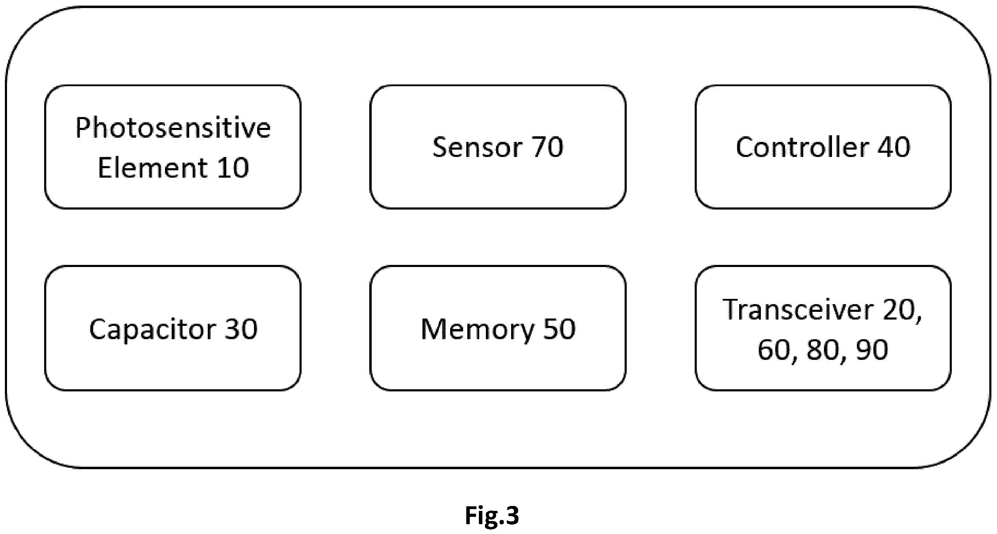

Fig. 3 is a schematic view of a basic configuration of a device according to the present disclosure. Unless indicated otherwise, all components, in particular elements having the same reference numbers, of the example according to Fig. 2 may be used with the one of Fig. 3 and vice versa. The device according to Fig. 3 comprises at least one photosensitive element 10 configured to convert electromagnetic radiation into electrical current and a capacitor 30 which is charged by the current from the at least one photosensitive element 10. The device further comprises a controller 40, a memory 50 and at least one sensor 70. In order to communicate with adjacent devices or base stations, a transceiver 20, 60, 80, 90 is provided. The transceiver can send and receive data wirelessly or via a cable connection to transmit measurement data, communicate with other devices e.g. for proximity detection and receive reconfiguration data or updates for the controller 40.

The light-weight and waterproof device according to the present disclosure can be attached to an object or living subject as long as required or over the complete lifecycle of the living subject e.g. using a collar, a harness, a leg band, an ear tag, a backpack, a band, a screw, glue or a claw.

The present disclosure further encompasses a system comprising at least two devices as described above. At least one of the devices is configured to calculate a relative position of the one device to at least one other device using a received signal strength (RSSI) from the at least one other device. This can be achieved, e.g., by Bluetooth LE communication. If two devices are involved, a distance between those two devices can be approximated while at least three devices allow for determining a relative position, i.e. a formation, without rotation information. The devices may also exchange said position information or transmit and receive other data from other devices.

For exact positioning, base stations or gateways may be set up which are able to communicate with at least one device. Via RSSI, a radial distance of the device from the base station can be approximated. If the device is in the transmission and reception range of two base stations, two possible positions of the device, i.e. the intersection points of two circles in a simplified two-dimensional space where the radius equals the distance approximated by the RSSI, can be determined. In the three-dimensional space, possible positions of the device are determined using the intersection of two spheres. If the device is able to communicate with three or more base stations, an unambigious position can be calculated.

Since storage space on the memory 50 is limited, the devices preferably transmit the collected data (raw data or pre-processed as explained above) to an adjacent base station if the RSSI and charging state of the capacitor allow. Subsequently, the data can be deleted from the memory 50 of the devices.

The present disclosure further comprises a method corresponding to the device and system as described above. The method may particularly refer to the battery management as described above. Furthermore, the method may particularly encompass the on-board processing of data. As has been described above, the device may process the raw data to generate statistical data and thereby save storage space in the memory 50. Computation of the statistical data may particularly be performed by the controller 40.

Movement metrics, i.e. obtaining and processing of the animal's movement data, may also be implemented based on summarised 3-axis acceleration data. An example for this processing is the vector of the dynamic body acceleration (VeDBA) as disclosed in Qasem L, Cardew A, Wilson A, Griffiths I, Halsey LG, Shepard ELC, et al. (2012) Tri-Axial Dynamic Acceleration as a Proxy for Animal Energy Expenditure; Should We Be Summing Values or Calculating the Vector? PLoS ONE 7(2): e31187. https://doi.org/10.1371/journal.pone.0031187. Alternatively, zero crossings and zero crossings average amplitude may be used as disclosed in Seo, Jungryul & Chiang, Yutsai & Laine, Teemu & Khan, Adil. (2015). Step counting on smartphones using advanced zero-crossing and linear regression. ACM IMCOM 2015 - Proceedings. 10.1145/2701126.2701223 (https://www.researchgate.net/publication/282680705 Step counting on smartphones u sing advanced zero-crossing and linear regression). If the dynamic acceleration is close to zero, a pitch and roll estimation may be employed.

Moreover, the rise and fall of the (super) capacitor voltage within a predetermined time window may be used for an estimation for sun exposure. For a 1F supercapacitor, a 30 second time window may for example be set.

As an alternative data transmission method, a long range transmission module based on a Sigfox loT network may be used. Sigfox can act as an alternative for data retrieval via Bluetooth LE and allows the transmission of summarised acceleration and environment data (barometric pressure, temperature, sun exposure, etc.) as well as trilaterated positional estimates (i.e. an alternative to GPS, but less accurate).

For better power management, a circuit that cuts off the main power supply of the microcontroller and integrated sensors/communication modules once the voltage drops below a certain threshold can be provided. The threshold may e.g. be 2.1 V. Otherwise the microcontroller may be held in reset at increased power consumption, and the device might not recover from the low voltage situation since the power provided by the photosensitive element(s) might not be sufficient. This also works as a fall back solution in case the software cannot keep the voltage above a certain threshold (e.g. by smart adaption of the sampling frequencies).

An exemplary implementation of an operational concept that does not waste recuperated energy may employ the following thresholds. If the voltage of the (super) capacitor is above 2.6 V, the device may transmit a wireless data message, e.g. a wireless long range Sigfox message. In case the voltage drops below 2.2 V, the device may be configured to hibernate, i.e. to be moved into a sleep mode. Thus, the power consumption may be less that 500 nA. When the voltage is above 2.2 V, the device may again be operating in a normal state, i.e. sampling sensor data and updating statistics / metrics as described above. This typically has a power consumption of around 2.5 µA. The above thresholds and values are meant as examples only and may be changed according to the properties of the device, the components or the environment in which the device is used.

The setup may also utilise a recuperation circuit with photo diodes and an MPPT (maximum power point tracking) harvesting circuit, preferably in a boost configuration. The harvesting circuit used in this particular example was an AEM10941 with two photo diodes.

According to the present disclosure, an improved device, system and method for recording and storing of measurement data related to an object or living subject is presented. By using a (super) capacitor as energy source, the environmental impact of the device is minimised since the manufacturing of capacitors requires less energy and resources in comparison to lithium cells. Furthermore, there is no risk of explosion or catching fire in case the capacitor is deep discharged, overcharged, deformed, penetrated or exposed to high temperatures. The electronics do not impose any risk to the environment, humans or animals.

Capacitors have a high operational temperature range compared to lithium cells and, in theory, infinite charging and discharging cycles without performance loss. The device can thus be worn longer while still providing full functionality. Capacitors can also be fully charged within seconds by an external power source while lithium cells can be degraded by continuous high charging currents.

Sensors such as cameras, environmental sensors or communication modules, e.g. LPWAN, temporarily require high operating currents which can be provided by capacitors even in small packages without damaging the capacitor. This allows for use of up-to-date electronics while minimising size and weight of the biologger. Small lithium cells may provide higher capacity, but a lower discharge current.

As all electronic components are directly driven by energy from the capacitor, lossy components such as LDOs or DC/DC converters may be omitted, thereby reducing standby and operating currents. The reduction of required components also leads to lower weight and costs. All components can be mounted directly on a PCB as SMD using reflow soldering and covered by a protective coating. No cables are needed. Therefore, a housing for protection of the electronics is not necessary. Via the software implemented energy management, excess energy is not converted into heat but is efficiently used for generation, transmission and receipt of data.

By processing the gathered data on-board and storing only statistical data, storage space may be used more efficiently and evaluation of the data may be facilitated. Furthermore, the transmission of data may be less energy consuming due to the pre-processing.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A device for recording and storing of measurement data related to an object or living subject, the device comprising:
at least one sensor (70) configured to measure data related to the object or living subject;
a memory (50);
a controller (40) configured to store the measured data in the memory (50);
at least one photosensitive element (10) configured to convert electromagnetic radiation into electrical current;
a transceiver (20, 60, 80, 90) configured to transmit the measured and/or stored data and to receive data signals; and
at least one capacitor (30) configured to store electrical current from the at least one photosensitive element (10),
wherein the controller (40) is configured to measure the voltage of the at least one capacitor (30), and
wherein the controller (40) is configured to forecast an output voltage of the at least one capacitor (30) based on measured voltages, and wherein the controller (40) is configured to increase or decrease the rate of sampling and storing of the measured data in the memory (50) and/or to increase or decrease the rate of transmitting the measured and/or stored data depending on the measured voltage or the forecasted voltage.

2. The device according to claim 1, wherein the rate of sampling and storing of the measured data in the memory (50) and/or the rate of transmitting the measured and/or stored data is highest at a maximum measured voltage or forecasted voltage and lowest at a minimum measured voltage or forecasted voltage,
wherein preferably the maximum voltage is the rated voltage of the capacitor (30) and the minimum voltage is 0.66 of the maximum voltage.

3. The device according to any one of claims 1 or 2, further comprising a real-time clock, RTC, wherein the RTC is preferably independently running from the controller (40), and
wherein the controller (40) is configured to power down at least one of the at least one sensor (70), the memory (50), or the transceiver (20, 60, 80, 90) when the measured voltage of the at least one capacitor (30) is below the minimum voltage, and
wherein preferably the controller (40) is configured to receive a wake-up signal from the RTC and to measure the voltage of the at least one capacitor (30) upon receipt of the wake-up signal.

4. The device according to any one of the preceding claims, wherein the device comprises a plurality of photosensitive elements (10), preferably arranged in series.

5. The device according to any one of the preceding claims, wherein the open-circuit voltage of the photosensitive element (10) or the sum of open-circuit voltages of the plurality of photosensitive elements (10) is higher than the rated voltage of the capacitor (30),
wherein preferably the rated voltage of the capacitor (30) is between 0.6 to 0.8 of the open-circuit voltage of the photosensitive element (10) or the sum of open-circuit voltages of the plurality of photosensitive elements (10), and more preferably 0.75 of the open-circuit voltage of the photosensitive element (10).

6. The device according to any one of the preceding claims, wherein the at least one photosensitive element (10) is or comprises a photodiode, wherein preferably the wavelength of the maximum sensitivity of the at least one photosensitive element (10) is between 200 nm and 3000 nm, preferably between 400 nm and 1100 nm, and/or
wherein the capacitor (30) has a capacity between 0.2 and 50 Farad.

7. The device according to any one of the preceding claims, wherein the transceiver (20, 60, 80, 90) is or comprises a long range wide area network module or a Bluetooth low energy module and/or
wherein the at least one sensor (70) is or comprises at least one of a gyroscope, an acceleration sensor, a temperature sensor, a humidity sensor, a magnetometer, a barometer, a light sensor, a volatile organic compounds, VOC, sensor or a global navigations satellite systems, GNSS, module.

8. The device according to any one of the preceding claims, further comprising at least one of a collar, a harness, a leg band, an ear tag, a backpack, a band, a screw, glue or a claw configured to be attached to the object or living subject.

9. The device according to any one of the preceding claims, further comprising a printed circuit board, PCB, wherein the at least one sensor (70), the memory (50), the controller (40), the at least one photosensitive element (10), the transceiver (20, 60, 80, 90) and the capacitor (30) are directly soldered to the PCB in one assembly step, preferably by reflow soldering.

10. System comprising at least two devices according to any one of the preceding claims, wherein the controller (40) of at least one of the at least two devices is configured to estimate the relative position of the at least one device to at least one other device of the at least two devices using the signal strength of signals, RSSI, received from the at least one other device of the at least two devices.

11. System comprising at least one device according to any one of claims 1 to 9, wherein the at least one device is configured to transmit and receive data signals to and from at least one other device, or
wherein the system further comprises at least one base station being configured to transmit and receive data signals to and from the at least one device.

12. Method for recording and storing of measurement data related to an object or living subject, the method comprising
measuring, by at least one sensor (70), data related to the object or living subject; storing, by a controller (40), the measured data in a memory (50);
converting, by at least one photosensitive element (10), electromagnetic radiation into electrical current;
transmitting the measured and/or stored data and receiving data signals by a transceiver (20, 60, 80, 90);
storing electrical current from the at least one photosensitive element (10) in at least one capacitor (30); and
measuring a voltage of the at least one capacitor (30);
wherein the method further comprises forecasting an output voltage of the at least one capacitor (30) based on measured voltages, and
increasing or decreasing the rate of sampling and storing of the measured data in the memory (50) and/or increasing or decreasing the rate of transmitting the measured and/or stored data depending on the measured voltage or the forecasted voltage.

13. Method according to claim 12, wherein the rate of sampling and storing of the measured data in the memory (50) and/or the rate of transmitting the measured and/or stored data is highest at a maximum measured voltage or forecasted voltage and lowest at a minimum measured voltage or forecasted voltage.

14. Method according to claim 12 or 13, further comprising generating, by the controller (40), statistical data of the measured data and storing the statistical data in the memory (50).

## Patentansprüche

1. Vorrichtung zum Aufzeichnen und Speichern von Messdaten, die sich auf einen Gegenstand oder ein lebendes Subjekt beziehen, wobei die Vorrichtung aufweist:
wenigstens einen Sensor (70), der konfiguriert ist, Daten zu messen, die auf den Gegenstand oder das lebende Subjekt bezogen sind;
einen Speicher (50);
eine Steuereinheit (40), die konfiguriert ist, die gemessenen Daten im Speicher (50) zu speichern;
wenigstens ein fotosensitives Element (10), das konfiguriert ist, eine elektromagnetische Strahlung in elektrischen Strom umzuwandeln;
einen Transceiver (20, 60, 80, 90), der konfiguriert ist, die gemessenen und/oder gespeicherten Daten zu übertragen und Datensignale zu empfangen; und
wenigstens einen Kondensator (30), der konfiguriert ist, elektrischen Strom von dem wenigstens einen fotosensitiven Element (10) zu speichern,
wobei die Steuereinheit (40) konfiguriert ist, die Spannung von dem wenigstens einen Kondensator (30) zu messen, und
wobei die Steuereinheit (40) konfiguriert ist, eine Ausgangsspannung von dem wenigstens einen Kondensator (30) basierend auf gemessenen Spannungen zu prognostizieren, und wobei die Steuereinheit (40) konfiguriert ist, eine Abtast- und Speicherrate der gemessenen Daten im Speicher (50), und/oder eine Übertragungsrate der gemessenen und/oder gespeicherten Daten in Abhängigkeit von der gemessenen Spannung oder der prognostizierten Spannung zu erhöhen oder zu verringern.

2. Vorrichtung nach Anspruch 1, wobei die Abtast- und Speicherrate der gemessenen Daten im Speicher (50) und/oder die Übertragungsrate der gemessenen und/oder gespeicherten Daten an einer maximalen gemessenen Spannung oder an prognostizierten Spannung am höchsten ist und an einer kleinsten gemessenen Spannung oder prognostizierten Spannung am niedrigsten ist,
wobei vorzugsweise die maximale Spannung die Nennspannung des Kondensators (30) ist und die kleinste Spannung 0,66 der maximalen Spannung ist.

3. Vorrichtung nach einem der Ansprüche 1 oder 2, die weiterhin eine Echtzeituhr, RTC, aufweist, wobei die RTC vorzugsweise unabhängig von der Steuereinheit (40) ausgeführt wird, und
wobei die Steuereinheit (40) konfiguriert ist, wenigstens eines von dem wenigstens einen Sensor (70), dem Speicher (50) oder dem Transceiver (20, 60, 80, 90) abzuschalten, wenn die gemessene Spannung des wenigstens einen Kondensators (30) unterhalb der kleinsten Spannung liegt, und
wobei vorzugsweise die Steuereinheit (40) konfiguriert ist, ein Aufwachsignal von der RTC zu empfangen und die Spannung von dem wenigstens einen Kondensator (30) bei Empfang des Aufwachsignals zu messen.

4. Vorrichtung nach einem der vorhergehenden Ansprüche, wobei die Vorrichtung mehrere fotosensitive Elemente (10) aufweist, die vorzugsweise in Reihe angeordnet sind.

5. Vorrichtung nach einem der vorhergehenden Ansprüche, wobei die Leerlaufspannung des fotosensitiven Elements (10) oder die Summe der Leerlaufspannungen der mehreren fotosensitiven Elemente (10) höher als die Nennspannung des Kondensators (30) ist,
wobei vorzugsweise die Nennspannung des Kondensators (30) zwischen 0,6 bis 0,8 der Leerlaufspannung des fotosensitiven Elements (10) oder der Summe der Leerlaufspannungen der mehreren fotosensitiven Elemente (10) ist, und bevorzugter 0,75 der Leerlaufspannung des fotosensitiven Elements (10) ist.

6. Vorrichtung nach einem der vorhergehenden Ansprüche, wobei das wenigstens eine fotosensitive Element (10) eine Fotodiode ist oder aufweist, wobei vorzugsweise die Wellenlänge der maximalen Empfindlichkeit des wenigstens einen fotosensitiven Elements (10) zwischen 200 nm und 3000 nm liegt, vorzugsweise zwischen 400 nm und 1100 nm und/oder wobei der Kondensator (30) eine Kapazität zwischen 0,2 und 50 Farad hat.

7. Vorrichtung nach einem der vorhergehenden Ansprüche, wobei der Transceiver (20, 60, 80, 90) ein Weitbereichsnetzwerkmodul mit hoher Reichweite oder ein Bluetooth-Niedrigenergiemodul ist oder aufweist, und/oder
wobei der wenigstens eine Sensor (70) wenigstens eines von einem Gyroskop, einem Beschleunigungssensor, einem Temperatursensor, einem Feuchtigkeitssensor, einem Magnetometer, einem Barometer, einem Lichtsensor, einem flüchtigen organischen Komponenten-, VOC-, Sensor oder einem globalen Navigationssatellitensystem-, GNSS-, Modul ist oder aufweist.

8. Vorrichtung nach einem der vorhergehenden Ansprüche, die weiterhin wenigstens ein Halsband, ein Geschirr, ein Beinband, ein Ohr-Tag, einen Rucksack, ein Band, eine Schraube, Kleber oder eine Klaue aufweist, die konfiguriert sind an dem Gegenstand oder dem lebenden Subjekt angebracht zu werden.

9. Vorrichtung nach einem der vorhergehenden Ansprüche, die weiterhin eine Platine, PCB, aufweist, wobei der wenigstens eine Sensor (70), der Speicher (50), die Steuereinheit (40), das wenigstens eine fotosensitive Element (10), der Transceiver (20, 60, 80, 90) und der Kondensator (30) direkt an der Platine in einem Montageschritt angelötet werden, vorzugsweise durch Reflow-Löten.

10. System, das wenigstens zwei Vorrichtungen gemäß einem der vorhergehenden Ansprüche aufweist, wobei die Steuereinheit (40) von wenigstens einer von den wenigstens zwei Vorrichtungen konfiguriert ist, die relative Position der wenigsten einen Vorrichtung zu wenigstens einer anderen Vorrichtung der wenigstens zwei Vorrichtungen unter Verwendung der Signalstärke der Signale, RSSI, zu schätzen, die von der wenigstens einem anderen Vorrichtung von den wenigstens zwei Vorrichtungen empfangen wurden.

11. System, das wenigstens eine Vorrichtung gemäß einem der Ansprüche 1 bis 9 aufweist, wobei die wenigstens eine Vorrichtung konfiguriert ist, Datensignale zu und von wenigstens einer anderen Vorrichtung zu übertragen und zu empfangen, oder
wobei das System weiterhin wenigstens eine Basisstation aufweist, die konfiguriert ist, Datensignale an die und von der wenigstens einen Vorrichtung zu übertragen und zu empfangen.

12. Verfahren zum Aufzeichnen und Speichern von Messdaten, die sich auf einen Gegenstand oder ein lebendes Subjekt beziehen, wobei das Verfahren aufweist:
Messen, durch wenigstens einen Sensor (70), von Daten, die auf den Gegenstand oder das lebende Subjekt bezogen sind;
Speichern, durch eine Steuereinheit (40), der gemessenen Daten in einem Speicher (50);
Umwandeln, durch wenigstens ein fotosensitives Element (10), einer elektromagnetischen Strahlung in elektrischen Strom;
Übertragen der gemessenen und/oder gespeicherten Daten und Empfangen von Datensignalen durch einen Transceiver (20, 60, 80, 90);
Speichern des elektrischen Stroms von dem wenigstens einem fotosensitiven Element (10) in wenigstens einem Kondensator (30); und
Messen einer Spannung des wenigstens einen Kondensators (30);
wobei das Verfahren weiterhin aufweist: das Prognostizieren einer Ausgangsspannung von dem wenigstens einen Kondensator (30) basierend auf den gemessenen Spannungen, und
Erhöhen oder Verringern der Abtast- und Speicherrate der gemessenen Daten im Speicher (50) und/oder Erhöhen oder Verringern der Übertragungsrate der gemessenen und/oder gespeicherten Daten in Abhängigkeit von der gemessenen Spannung oder der prognostizierten Spannung.

13. Verfahren nach Anspruch 12, wobei die Abtast- und Speicherrate der gemessenen Daten im Speicher (50) und/oder die Übertragungsrate der gemessenen und/oder gespeicherten Daten bei einer maximalen gemessenen Spannung oder prognostizierten Spannung am höchsten ist und bei einer kleinsten gemessenen Spannung oder prognostizierten Spannung am niedrigsten ist.

14. Verfahren nach Anspruch 12 oder 13, das weiterhin das Erzeugen, durch die Steuereinheit (40), von statistischen Daten der gemessenen Daten und Speichern der statistischen Daten im Speicher (50) aufweist.

## Revendications

1. Dispositif destiné à enregistrer et stocker des données de mesurage se rapportant à un objet ou à sujet vivant, le dispositif comprenant :
au moins un capteur (70) configuré pour mesurer des données se rapportant à l'objet ou au sujet vivant ;
une mémoire (50) ;
un contrôleur (40) configuré pour stocker les données mesurées dans la mémoire (50) ;
au moins un élément photosensible (10) configuré pour convertir un rayonnement électromagnétique en courant électrique ;
un émetteur-récepteur (20, 60, 80, 90) configuré pour émettre les données mesurées et/ou stockées et pour recevoir des signaux de données ; et
au moins un condensateur (30) configuré pour stocker un courant électrique provenant dudit au moins un élément photosensible (10),
dans lequel le contrôleur (40) est configuré pour mesurer la tension dudit au moins un condensateur (30), et
dans lequel le contrôleur (40) est configuré pour prévoir une tension de sortie de l'un au moins des condensateurs (30) sur la base de tensions mesurées, et dans lequel le contrôleur (40) est configuré pour augmenter ou diminuer le taux d'échantillonnage et de stockage des données mesurées dans la mémoire (50) et/ou pour augmenter et diminuer le taux de transmission de données mesurées et/ou stockées en dépendance de la tension mesurée ou de la tension prévue.

2. Dispositif selon la revendication 1, dans lequel le taux d'échantillonnage et de stockage des données mesurées dans la mémoire (50) et/ou le taux de transmission des données mesurées et/ou stockées est le plus élevé à une tension mesurée ou tension prévue maximum et le plus bas à une tension mesurée ou tension prévue minimum,
dans lequel de préférence la tension maximum est la tension nominale du condensateur (30) et la tension minimum est 0,66 de la tension maximum.

3. Dispositif selon l'une quelconque des revendications 1 ou 2, comprenant en outre une horloge en temps réel, HTR, dans lequel l'HTR fonctionne de préférence indépendamment du contrôleur (40), et
dans lequel le contrôleur (40) est configuré pour éteindre l'un au moins desdits au moins un capteur (70), la mémoire (50), ou l'émetteur-récepteur (20, 60, 80, 90) quand la tension mesurée dudit au moins un condensateur (30) est en dessous de la tension minimum, et
dans lequel de préférence le contrôleur (40) est configuré pour recevoir un signal de réveil depuis l'HTR et pour mesurer la tension dudit au moins un condensateur (30) lors de la réception du signal de réveil.

4. Dispositif selon l'une quelconque des revendications précédentes, dans lequel le dispositif comprend une pluralité d'éléments photosensibles (10), de préférence agencés en série.

5. Dispositif selon l'une quelconque des revendications précédentes, dans lequel la tension en circuit ouvert de l'élément photosensible (10) ou la somme des tensions en circuit ouvert de la pluralité d'éléments photosensibles (10) est supérieure à la tension nominale du condensateur (30),
dans lequel de préférence la tension nominale du condensateur (30) est de 0,6 à 0,8 de la tension en circuit ouvert de l'élément photosensible (10) ou de la somme des tensions en circuit ouvert de la pluralité d'éléments photosensibles (10), de toute préférence 0,75 de la tension en circuit ouvert de l'élément photosensible (10).

6. Dispositif selon l'une quelconque des revendications précédentes, dans lequel ledit au moins un élément photosensible (10) est ou comprend une photodiode, dans lequel de préférence la longueur d'onde de la sensibilité maximum dudit au moins un élément photosensible (10) est entre 200 nm et 3 000 nm, de préférence entre 400 nm et 1 100 nm, et/ou
dans lequel le condensateur (30) a une capacité entre 0,2 et 50 farad.

7. Dispositif selon l'une quelconque des revendications précédentes, dans lequel l'émetteur-récepteur (20, 60, 80, 90) est ou comprend un module de réseau étendu à longue portée ou un module basse consommation Bluetooth et/ou
dans lequel ledit au moins un capteur (70) est ou comprend l'un au moins d'un gyroscope, d'un capteur d'accélération, d'un capteur de température, d'un capteur d'humidité, d'un magnétomètre, d'un baromètre, d'un capteur de lumière, d'un capteur de composés organiques volatiles, COV, ou d'un module GNSS de systèmes globaux de positionnement par satellite.

8. Dispositif selon l'une quelconque des revendications précédentes, comprenant en outre au moins un élément parmi un collier, un harnais, une jambière, une étiquette d'oreille, un sac à dos, une bande, une vis, de la colle ou un pince configuré pour être attaché à l'objet ou au sujet vivant.

9. Dispositif selon l'une quelconque des revendications précédentes, comprenant en outre un carte à circuit imprimée, PCB (printed circuit board), dans lequel ledit au moins un capteur (70), la mémoire (50), le contrôleur (40), ledit au moins un élément photosensible (10), l'émetteur-récepteur (20, 60, 80, 90) et le condensateur (30) sont soudés directement à la PCB dans une étape d'assemblage, de préférence par soudage par refusion.

10. Système comprenant au moins deux dispositifs selon l'une quelconque des revendications précédentes, dans lequel le contrôleur (40) de l'un au moins desdits au moins deux dispositifs est configuré pour estimer la position relative dudit au moins un dispositif par rapport à au moins un autre dispositif desdits au moins deux dispositifs en utilisant l'indication de la force du signal reçu, RSSI, de signaux reçus depuis ledit au moins un autre dispositif desdits au moins deux dispositifs.

11. Système comprenant au moins un dispositif selon l'une quelconque des revendications 1 à 9, dans lequel ledit au moins un dispositif est configuré pour émettre et recevoir des signaux de données vers et depuis au moins un autre dispositif, ou
dans lequel le système comprend au moins une station de base configurée pour émettre et recevoir des signaux de données vers et depuis ledit au moins un dispositif.

12. Procédé pour enregistrer et stocker des données de mesurage se rapportant à un objet ou à un sujet vivant, le procédé comprenant les étapes consistant à :
mesurer, via au moins un capteur (70), des données se rapportant à l'objet ou au sujet vivant ;
stocker, via un contrôleur (40), les données mesurées dans une mémoire (50) ;
convertir, via au moins un élément photosensible (10), un rayonnement électromagnétique en courant électrique ;
émettre les données mesurées et/ou stockées et recevoir des signaux de données via un émetteur-récepteur (20, 60, 80, 90) ;
stocker un courant électrique provenant dudit au moins un élément photosensible (10) dans au moins un condensateur (30) ; et
mesurer une tension dudit au moins un condensateur (30) ;
dans lequel le procédé comprend en outre les étapes consistant à
prévoir une tension de sortie dudit au moins un condensateur (30) sur la base de tensions mesurées, et
augmenter ou diminuer le taux d'échantillonnage et de stockage des données mesurées dans la mémoire (50) et/ou augmenter ou diminuer le taux de transmission des données mesurées et/ou stockées en dépendance de la tension mesurée ou de la tension prévue.

13. Procédé selon la revendication 12, dans lequel le taux d'échantillonnage et de stockage des données mesurées dans la mémoire (50) et/ou le taux de transmission des données mesurées et/ou stockées est le plus élevé à une tension mesurée ou tension prévue maximum et le plus bas à une tension mesurée ou tension prévue minimum,

14. Procédé selon la revendication 12 ou 13, comprenant en outre les étapes consistant à générer, via le contrôleur (40), des données statistiques des données mesurées, et à stocker les données statistiques dans la mémoire (50).
